# EUROPÄISCHE PATENTANMELDUNG

(11) **EP 0 661 314 A1**
(43) Veröffentlichungstag der Anmeldung: **05.07.1995**
(21) Anmeldenummer: 94119739.4
(22) Anmeldetag: 14.12.1994
(51) Int. Cl.: C08F 299/02, C08G 18/28, C09D 163/10

(54) **Wässrige, strahlenhärtbare Bindemitteldispersionen**

(30) Priorität: 22.12.1993 DE 4343885
(71) Anmelder: HOECHST AKTIENGESELLSCHAFT, D-65926 Frankfurt am Main (DE)
(72) Erfinder: Kurth, Inge, D-65193 Wiesbaden (DE); Brindöpke, Gerhard, Dr., D-65843 Sulzbach (DE); Marten, Manfred, D-55126 Mainz (DE)

(57) **Zusammenfassung**

Wäßrige strahlenhärtbare Bindemittel und Bindemitteldispersionen enthaltend im wesentlichen
A) ein strahlenhärtbares Bindemittel und
B) ein strahlenhärtbares, hydrophiles Polyepoxidacrylat.

## Beschreibung

Die Erfindung betrifft wäßrige, strahlenhärtbare Bindemitteldispersionen, die frei von Lösemitteln sind. Die Dispersionen enthalten ein strahlenhärtbares Bindemittel und einen strahlenhärtbaren Emulgator.

(Meth)-Acryloylgruppen aufweisende Polyurethane (sogenannte Urethan-(meth)-acrylate) und Polyepoxide sind seit langem bekannt und als Bindemittel für z.B. UV-härtbare Lacke sehr gut geeignet (vgl. z.B. DE-A 27 37 406). Die relativ hohe Viskosität dieser Produkte erfordert praktisch immer die Mitverwendung von organischen Lösungsmitteln.

Auch wasserverdünnbare Urethan-(meth)-acrylate sind bekannt (vgl. z.B. DE-A 29 36 039). Die Hydrophilie dieser bekannten Systeme basiert auf der Anwesenheit von ionischen Zentren, insbesondere von Sulfonatgruppen, die als Gegenionen Alkalikationen oder Ammoniumionen (aus tert. Aminen) aufweisen, die in den aus den Systemen letztendlich erhaltenen Überzügen wenigstens zum Teil verbleiben und deren Wasserresistenz erheblich beeinträchtigen.

Eine andere Möglichkeit zu wasserverdünnbaren Produkten zu gelangen, besteht im Einsatz von externen Emulgatoren. So werden beispielsweise gemäß US-A 4,070,323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme wesentlich herabgesetzt.

In der DE-A 39 00 257 wird beschrieben, wie man durch Umsetzung eines Polyäthylenglykols mit einem Polyisocyanat und einem Hydroxyalkyl(meth)acrylat ein hydrophiles, strahlenhärtbares Urethanacrylat aufbaut, das als Emulgator für hydrophobe Urethanacrylate dienen kann. Die emulgierenden Eigenschaften dieser Produkte sind gering und die Stabilität der daraus hergestellten Dispersionen eingeschränkt.

Der Erfindung lag daher die Aufgabe zugrunde, strahlenhärtbare Dispersionen mit verbesserter Stabilität, höherem Feststoffgehalt und vereinfachter Herstellbarkeit bereitzustellen. Diese Aufgabe wird dadurch gelöst, daß hydrophile, strahlenhärtbare Polyepoxyacrylate zur Verfügung gestellt werden, die laterale Polyäthylenglykolsegmente als hydrophile Gruppen enthalten und dadurch gut in Wasser löslich sind und sowohl als wäßrige Alleinbindemittel als auch als Emulgatoren eingesetzt werden können.

Gegenstand der Erfindung sind somit wäßrige strahlenhärtbare Bindemittel und Bindemitteldispersionen enthaltend im wesentlichen
A) ein strahlenhärtbares, (Meth)-acrylatgruppen enthaltendes Bindemittel und
B) ein strahlenhärtbares, hydrophiles Polyepoxidacrylat.

Die Erfindung betrifft im Besonderen wäßrige strahlenhärtbare Bindemittel und Bindemitteldispersionen enthaltend im wesentlichen
A) ein strahlenhärtbares, (Meth)-acrylatgruppen enthaltendes Bindemittel und
B) ein strahlenhärtbares, hydrophiles Polyepoxidacrylat, erhalten aus einer Di- oder Polyepoxid-Komponente B0)
   B1) durch Umsetzung mit einem primären oder sekundären Monoamin eines Polyäthylen(propylen-)glykolmonoäthers und/oder
   B2) durch Umsetzung mit einem Diisocyanat oder Polyisocyanat und danach mit einem Polyäthylen-(propylen-)glykolmonoäther
sowie in einem nachfolgenden Schritt durch Umsetzung mit Acryl- oder Methacrylsäure.

Als Komponente A) kommen alle bekannten Bindemittel in Frage, die (Meth)acryloylgruppen tragen und daher strahlenhärtbar sind. Beispiele für solche polymeren Bindemittel sind Polyacrylatacrylate, Polyepoxyacrylate, Polyurethanacrylate, Polyesteracrylate, Polyätheracrylate, Melaminacrylate sowie die entsprechenden Methacrylverbindungen. Polymere dieser Art sind im Detail beschrieben in "UV&EB Curing Formulation for Printing Inks, Coatings & Paints", edited by R. Holman & P. Oldring, London 1988, ISBN 0 947798 02 1.

Das strahlenhärtbare, hydrophile Polyepoxidacrylat B) ist ein Polyepoxy-(meth)-acrylat mit einem Gehalt an (Meth)acryloyl-Gruppen. Die Herstellung dieser Komponente erfolgt durch Reaktion von Acrylsäure oder Methacrylsäure mit einem hydrophilen Polyepoxid, das laterale Polyäthylen-(propylen)-glykolsegmente enthält. Dieses Polyepoxidacrylat B) ist auch alleine als Bindemittel verwendbar.

Man erhält ein solches hydrophiles Polyepoxid im Falle von B1) durch Reaktion eines Polyepoxids B0) mit einem primären oder sekundären Polyäthylen-(propylen)-glykolmonoätheramins (Handelsbezeichnung ®Jeffamine) oder im Fall von B2) durch Umsetzung eines OH-gruppenhaltigen Polyepoxides B0) mit einem Diisocyanat und danach einem Polyäthylen-(propylen)-glykolmonoäther.

Als Epoxidkomponente B0) für die Herstellung der hydrophilen Polyepoxide kommen eine Vielzahl der hierfür bekannten Verbindungen in Betracht, die im Mittel mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt, sowie aliphatisch, cycloaliphatisch, aromatisch oder hetero-cyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Die Epoxidverbindungen B0) werden durch Reaktion von Verbindungen B01) mit mehr als einer Epoxidgruppe pro Molekül und Verbindungen B02) mit mehr als einer gegenüber Epoxidgruppen reaktiven Gruppe hergestellt. Bei der Herstellung können auch Mischungen mit Monoepoxiden B03) und/oder mit Verbindungen B04) eingesetzt werden, die nur eine gegenüber Epoxidgruppen reaktive Gruppe aufweisen. Bevorzugt sind die gegenüber Epoxidgruppen reaktiven Gruppen Hydroxylgruppen. Vorzugsweise handelt es sich daher bei den Verbindungen B0) um Glycidyläther mehrwertiger Phenole oder mehrwertiger Alkohole, deren Epoxidäquivalentgewichte zwischen 150 und 900, insbesondere jedoch zwischen 150 und 650 g/mol, liegen und die Hydroxylzahlen von 0 bis 200, vorzugsweise 5 bis 100 mg KOH / g aufweisen.

Als mehrwertige Phenole B02) sind Di- und Polyhydroxyaromaten B021), Di- und Polyhydroxyaryl-Ketone B024), -Äther B023) und -Sulfone B025) sowie Bis- und Poly-Hydroxyaryl(cyclo)alkane B022) zu nennen wie beispielsweise: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4'-hydroxyphenyl)-1,1-äthan, Bis-(4'-hydroxyphenyl)-1,1-isobutan, Bis-(4'-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen.

Es können auch Polyglycidyläther von Polyalkoholen B026) verwendet werden, wie z.B. Äthandiol-1,2-diglycidyläther, Propandiol-1,2-diglycidyläther, Propandiol-1,3-diglycidyläther, Butandioldiglycidyläther, Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, Trimethylolpropans, Trimethyloläthans, Pentaerythrits, Sorbits, Polyglycidyläther von oxalkylierten Polyolen (wie z. B. des Glycerins, Trimethylolpropans, Pentaerythrits u. a.), Diglycidyläther des Cyclohexandimethanols, Bis-(4-hydroxycyclohexyl)methans und 2,2-Bis-(4'-hydroxycyclohexyl)propans, Polyglycidyläther des Rizinusöls oder des Triglycidyltris-(2-hydroxy-äthyl)-isocyanurats.

Vorzugsweise werden Polyglycidyläther mit einem Epoxidäquivalentgewicht von 150 bis 800, insbesondere von 300 bis 400 g/mol, eingesetzt.

In besonderen Fällen können zusätzlich zu den Polyglycidyläthern geringe Mengen reaktiver Verdünner, wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von C₁₂ bis C₁₃-Alkoholen, Phenylglycidyläther, Kresylglycidyläther, p-t-Butylphenylglycidyläther, p-Octylphenylglycidyläther, p-Phenyl-phenylglycidyläther, Glycidyläther eines oxalkylierten Laurylalkohols u. a. in Mengen bis zu 30 %, vorzugsweise 10 - 20 %, bezogen auf Polyglycidyläther mitverwendet werden.

Weiterhin kommen in Frage Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl) Verbindungen zählen aber auch Triglycidylisocyanurat, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

In manchen Fällen kann es auch vorteilhaft sein, glycidylestergruppenhaltige Copolymerisate als Epoxidkomponente einzusetzen, die durch Copolymerisation von z.B. Glycidylmethacrylat mit anderen (Meth-)acrylsäureestern oder durch Copolymerisation mit Styrol erhalten wurden.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2. Weiterhin sei hier auf die EP-A 272 595 und 286 933 verwiesen. Es können auch Mischungen von mehreren Epoxidharzen verwendet werden.

Die für die Herstellung der hydrophilen Epoxide des Typs B1) benötigten Polyoxyalkylenmonoamine sind Verbindungen der Formel 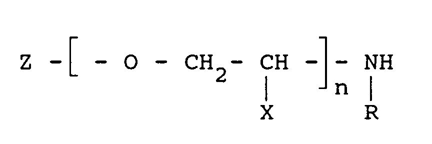
wobei X Wasserstoff, ein Methyl- oder Äthylrest, Z und R Wasserstoff oder einen linearen oder verzweigten Kohlenwasserstoffrest mit 1 bis 8 Kohlenstoffatomen und n einen Mittelwert bedeutet, der zwischen 2 und 150 liegt.

Bevorzugt werden Polyoxyalkylenmonoamine der Formel 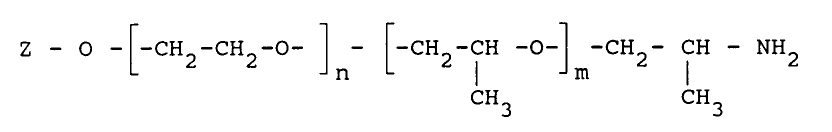
in der Z ein Kohlenwasserstoffrest mit 1 bis 5 Kohlenstoffatomen, insbesondere ein Methylrest, und unabhängig voneinander n = 0 bis 50 und m = 0 bis 20 bedeuten, eingesetzt.

Einige ausgewählte der vorstehend beschriebenen Monoamin-Blockcopolymere mit Oxyäthylen- und Oxypropylengruppen werden z. B. von der Firma Texaco Chemical Co., Inc. unter der Handelsbezeichnung ®Jeffamine M-Serie vertrieben. Besonders erwähnt seien hier die Jeffamine M 600, M 1000, und M 2070.

Die erfindungsgemäßen hydrophilen Epoxidverbindungen (Typ B1) werden in der Weise hergestellt, daß die Epoxide mit den Polyoxyalkylenmonoaminen unter Rühren und im allgemeinen unter Erwärmen solange umgesetzt werden, bis das theoretisch berechnete Epoxidäquivalentgewicht erreicht ist, d. h. bis alle aktiven Wasserstoffe des Polyoxyalkylenmonoamins mit den im Überschuß vorhandenen Epoxidgruppen reagiert haben. Der Überschuß an Epoxidgruppen kann dabei im weiten Bereich variiert werden. Im Falle von Diepoxiden kann das molare Verhältnis von N-H-Gruppen zu Diepoxiden von 1:1,5 bis 1:100 vorzugsweise 1:2 bis 1:50 betragen, wobei die Anforderungen wie Löslichkeit und Emulgierfähigkeit das Verhältnis bestimmen. Die Reaktionstemperaturen werden dabei im allgemeinen bei 25 bis 200 °C, vorzugsweise bei 50 bis 150 °C, insbesondere bei 80 bis 130 °C, gehalten. Je nach Temperatur und eingesetzten Epoxiden und Aminen liegen die Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig.

Geeignete Di- oder Polyisocyanate für die Herstellung des hydrophilen Epoxids gemäß B2) sind die aus der Polyurethanchemie an sich bekannten organischen Polyisocyanate mit aliphatisch, cycloaliphatisch und/oder aromatisch gebundenen Isocyanatgruppen, die vorzugsweise eine Molmasse von 150 bis 1000, vorzugsweise von 150 bis 300 g/mol, aufweisen. Geeignet sind beispielsweise 1-Isocyanato-3,3,5-trimethyl-5-isocyanatomethylcyclohexan (IPDI), 4,4'-Diisocyanatodicyclohexylmethan, 4,4'-Diisocyanatodiphenylmethan, dessen technische Gemische mit 2,4'-Diisocyanatodiphenylmethan und gegebenenfalls den höheren Homologen dieser Diisocyanate, 2,4-Diisocyanatotoluol und dessen technische Gemische mit 2,6-Diisocyanatotoluol, Hexamethylendiisocyanat, Trimethylhexamethylendiisocyanat oder Tetramethylxylylendiisocyanat (TMXDI).

Geeignet sind auch Biuret-, Isocyanurat- oder Urethan-modifizierte Polyisocyanate auf Basis dieser einfachen Polyisocyanate. Diese Derivate weisen im allgemeinen Molmassen bis zu 1000 g/mol auf. Die Herstellung derartiger Derivate ist beispielsweise in US-A 3,124,604, US-A 3,183,112, US-A 3,919,218 oder US-A 4,324,879 beschrieben.

Bei den verwendeten Polyäthylen-(propylen-) glykolmonoäthern handelt es sich um lineare Monoätherglykole mit einer Molmasse von 200 bis 20000, vorzugsweise 300 bis 15000 g/mol, deren Alkylenoxideinheiten zumindest zu 80 %, vorzugsweise zu 100 % Äthylenoxideinheiten sind. Diese Monoätherglykole erhält man z. B. durch Umsetzung niederer Alkohole wie Methanol, Äthanol, Isopropanol oder der isomeren Butanole mit Äthylenoxid oder einem Äthylen-propylenoxidgemisch.

Der Begriff "Monoätherglykole" soll somit nicht nur echte Polyäthylenglykolmonoäther, deren Alkylenoxideinheiten ausschließlich Äthylenoxideinheiten sind, sondern auch Polyalkylenglykolmonoäther umfassen, deren Alkylenoxideinheiten überwiegend, d.h. zumindest zu 80 % Äthylenoxideinheiten sind. Derartige "gemischte" Polyalkylenglykolmonoäther entstehen beispielsweise durch Verwendung von Gemischen verschiedener Alkylenoxide beispielsweise von Äthylenoxid und Propylenoxid im Molverhältnis 8:1 bei der Herstellung der Monoätherglykole durch Alkoxylierung geeigneter einwertiger Startermoleküle wie z.B. Methanol, Äthanol, Isopropanol oder die isomeren Butanole. Bevorzugt sind jedoch reine Polyäthylenglykolmonoäther.

Die Herstellung des B2) entsprechenden hydrophilen Epoxids kann beispielsweise so erfolgen, daß die Hydroxylgruppen des Di- oder Polyepoxids zuvor mit dem Di- oder Polyisocyanat so umgesetzt werden, daß noch freie Isocyanatgruppen übrig bleiben, die man dann anschließend mit dem Polyäthylenglykolmonoäther reagieren läßt. Man kann aber auch so vorgehen, daß zuerst der Polyäthylenglykolmonoäther mit dem Isocyanat reagiert und dann die Umsetzung mit den OH-Gruppen des Polyepoxids erfolgt. In einzelnen Fällen kann aber auch so vorgegangen werden, daß die Umsetzung beider OH-Komponenten mit dem Isocyanat gleichzeitig erfolgt.

Die Herstellung dieser erfindungsgemäßen, hydrophilen Epoxide gemäß B2) durch Umsetzung der zuvorgenannten Ausgangskomponenten kann in Substanz oder in gegenüber Isocyanatgruppen inerten Lösungsmitteln wie beispielsweise Aceton, Methyläthylketon, Äthylacetat, Butylacetat, Toluol, niedermolekularen Estern der (Meth)acrylsäure oder in Gemischen derartiger Lösungsmittel erfolgen, wobei vorzugsweise Reaktionstemperaturen von 20 bis 120 °C, insbesondere 20 bis 110 °C eingehalten werden.

Die Reaktion kann aber auch in Gegenwart eines strahlenhärtbaren, gegenüber Isocyanaten inerten Reaktivverdünners wie z.B. Hexandioldiacrylat, Trimethylolpropantriacrylat oder des Triacrylats vom äthoxylierten Trimethylolpropan durchgeführt werden.

Eine Katalyse der Reaktion durch Verbindungen wie Dibutylzinndilaurat, Zinnoctoat, tertiären Aminen oder Zinkacetylacetonat kann von Vorteil sein, ohne daß dabei die Qualität des Produktes leidet.

Grundsätzlich werden hierbei Art und Mengenverhältnisse der Ausgangskomponenten innerhalb der stöchiometrischer Bereiche so gewählt, daß bezogen auf alle Ausgangsverbindungen ein NCO/OH-Äquivalentverhältnis von 0,8 bis 1,2 bzw. 1,2 bis 0,8 gewährleistet ist.

Die Herstellung der erfindungsgemäßen, als Emulgatoren zu verwendenden hydrophilen Polyepoxyacrylate B durch Umsetzung der genannten hydrophilen Epoxide mit (Meth)-acrylsäure kann in Substanz oder in Gegenwart inerter Lösungsmitteln wie beispielsweise Aceton, Methyläthylketon, Äthylacetat, Butylacetat, Toluol, niedermolekularen Estern der (Meth)acrylsäure oder Gemischen derartiger Lösungsmittel erfolgen, wobei vorzugsweise Reaktionstemperaturen von 80 bis 120 °C, insbesondere 80 bis 110 °C eingehalten werden.

Die Umsetzung des hydrophilen Epoxids B1 oder B2 kann auch in Gegenwart des zu dispergierenden Polyacrylats A erfolgen, so kann z.B. im Falle von Epoxidacrylaten als zu dispergierende Komponente A, die Umsetzung des Ausgangsepoxids und des hydrophilen Epoxids B1 oder B2 mit Acrylsäure oder Methacrylsäure gleichzeitig erfolgen.

Es ist aber auch möglich, die zu dispergierenden Polyacrylate A als inertes Reaktionsmedium für die Umsetzung des hydrophilen Epoxids B1 oder B2 zu nutzen.

Die Reaktion kann auch in Gegenwart eines strahlenhärtbaren inerten Reaktivverdünners wie z.B. Hexandiolacrylat, Trimethylolpropantriacrylat oder des Triacrylats vom äthoxylierten Trimethylolpropan durchgeführt werden.

Diese Umsetzung läßt sich durch geeignete und dem Fachmann bekannte Verbindungen katalysieren, repräsentativ sollen an dieser Stelle Triphenylphosphin, Triäthylamin, Triäthanolamin oder Chrom-III-octoat genannt werden.

Die Mengenverhältnisse von Epoxidgruppen zu Carboxylgruppen bei den Ausgangsverbindungen zur Herstellung des Emulgators B) betragen vorzugsweise 1,2 zu 0,8 bis 0,8 zu 1,2.

Neben diesen ungesättigten Säuren lassen sich zur Modifikation und zur Erzielung besonderer Eigenschaften in untergeordneten Mengen auch Mono- und Dicarbonsäuren sowie deren Anhydride mitverwenden, insbesondere seien hier genannt Laurinsäure, Stearinsäure, Adipinsäure, Bernstein- oder Maleinsäureanhydrid sowie Dodecenylbernsteinsäureanhydrid.

Die auf diese Weise erhaltenen hydrophilen (Meth)acryloylgruppen aufweisenden Polyepoxide B haben eine als Gewichtsmittel bestimmte, nach der Methode der Gelpermeationschromatographie ermittelbare Molmasse Mw von 500 bis 30000, vorzugsweise 800 bis 20000 g/mol und einen Massengehalt an über Polyäthylenglykol eingebauten Äthylenoxideinheiten C₂H₄O von 10 bis 90, vorzugsweise 20 bis 90 %.

Um den resultierenden Emulgator vor unerwünschter, vorzeitiger Polymerisation zu bewahren, empfiehlt es sich, bereits bei der Herstellung 0,001 - 0,5 % an Polymerisationsinhibitoren, bezogen auf die Gesamtmasse der Mischung zuzusetzen. Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1 - 6 C-Atomen enthalten, Amine, vorzugsweise sekundäre Arylamine und ihre Derivate, Chinone, Kupfer-I-Salze organischer Säuren oder Anlagerungsverbindungen von Kupfer-(l)-halogeniden an Phosphite.

Namentlich seien genannt: 4,4'-Bis-(2,6-di-tert.-butylphenol), 1,3,5-Trimethyl-2,4,6-tris-(3',5'-di-tert.-butyl-4'-hydroxy-benzyl)-benzol, 4,4'-Butyliden-bis-(6-tert.-o-butyl-m-kresol), 3,5-Di-tert.-butyl-4-hydroxybenzylphosphonsäurediäthylester, N,N'-Bis-(β-naphthyl)-p-phenylendiamin, N,N'-Bis-(1-methylheptyl)-p-phenylendiamin, Phenyl-β-naphthylamin, 4,4'-Bis-(α,α-dimethylbenyzl)-diphenylamin, 1,3,5-Tris-(3',5'-di-tert.-butyl-4-hydroxy-hydrocinnamoyl)-hexahydro-s-triazin, Hydro-chinon, p-Benzochinon, 2,5-Di-tert.-butylchinon, Toluhydrochinon, p-tert.-Butylbrenzkatechin, 3-Methylbrenzkatechin, 4-Äthylbrenzkatechin, Chloranil, Naphthochinon, Kupfernaphthenat, Kupferoctoat, p-Nitrosodimethylanilin. Weiter geeignete Stabilisatoren sind in "Methoden der organischen Chemie" (Houben-Weyl), 4. Auflage, Band XIV/1, S. 433-452, 756, Georg Thieme Verlag, Stuttgart, 1961, beschrieben.

Zur Herstellung der erfindungsgemäßen wäßrigen Bindemittel und wäßrigen Dispersionen werden die Komponenten A) und B) gemischt und in diese Mischung wird dann unter Rühren Wasser eingetragen. Das Gewichtsverhältnis der Komponenten A) und B) beträgt 0 bis 98, vorzugsweise 0 bis 95 % der Komponenten A) und 100 bis 2, vorzugsweise 30 bis 5 % der Komponente B). Zur Ausbildung einer feinteiligen Emulsion ist portionsweiser Wasserzusatz bis zu dem gewünschten Feststoffgehalt bei Temperaturen unterhalb 60 °C vorteilhaft. Es können auf diese Weise sowohl klare bis opake Bindemittellösungen als auch stabile Öl- in-Wasser-Emulsionen erhalten werden.

Die auf diese Weise erhaltenen wäßrigen Dispersionen sind wertvolle wäßrige Bindemittel für Überzugsmittel. Sie können als solche oder in Kombination mit den aus der Lacktechnologie bekannten Hilfs- und Zusatzmitteln wie z.B. Füllstoffen, Pigmenten, Lösungsmitteln, Verlaufsmitteln u.dgl. zur Herstellung von Beschichtungen auf beliebigen Substraten verwendet werden. Geeignete Substrate sind Papier, Kartonage, Leder, Holz, Kunststoffe, Vlies, Textilien, keramische Materialien, mineralische Materialien, Glas, Metall, Kunstleder, photographische Materialien wie z.B. mit photographischer Schicht versehenes Papier.

Die erfindungsgemäßen Dispersionen und Bindemittellösungen können Feststoffmassengehalte von 5 bis 90 % besitzen. Unter Feststoffmassengehalt wird die Summe aus der Masse von Bindemittel und Emulgator, bezogen auf die Masse der Dispersion, verstanden.

Der Auftrag dieser Dispersionen und der erfindungsgemäßen Dispersionen kann auf bekannte Weise durch Spritzen, Rakeln, Walzen, Streichen, Tauchen oder Gießen erfolgen. Nach Verdunsten des Wassers sowie gegebenenfalls mitverwendeter inerter Lösungsmittel kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro)-peroxiden bei Temperaturen zwischen 80 und 250 °C erfolgen.

Werden die erfindungsgemäßen Dispersionen durch UV-Licht gehärtet, so ist der Zusatz von Photoinitiatoren erforderlich. Diese werden in der Regel im Bindemittel gelöst und mit diesem in der wäßrigen Phase dispergiert oder nachträglich zugefügt und dispergiert. Als Photoinitiatoren sind die üblicherweise eingesetzten Verbindungen geeignet, wie z.B. in der Monographie von J. Kosar, Light-Sensitive Systems, J. Wiley & Sons, New York - London - Sydney, 1965 beschrieben sind. Weiterhin gut geeignet sind Benzoinäther wie Benzoinisopropyläther, Benzilketale, wie z.B. Benzildimethylketal und Hydroxyalkylphenole, wie z.B. 2-Hydroxy-2-methyl-1-phenyl-propan-1-on.

Die erwähnten Photoinitiatoren, die je nach Verwendungszweck der erfindungsgemäßen Massen in Massenanteilen zwischen 0,1 und 10 %, vorzugsweise 0,1 bis 5 %, bezogen auf die Masse der dispergiert vorliegenden Bindemittel eingesetzt werden, können als einzelne Substanz oder, wegen häufiger vorteilhafter Effekte auch in Kombination miteinander verwendet werden.

Als Strahlenquellen zu Durchführung der Photopolymerisation können künstliche Strahler, deren Emission im Bereich von 2500-5000, vorzugsweise 3000-4000 Å liegt, verwendet werden. Vorteilhaft sind Quecksilberdampf- und Xenon-Lampen, insbesondere Quecksilberhochdruckstrahler. In der Regel lassen sich Schichten der erfindungsgemäßen Reaktionsprodukte in weniger als einer Sekunde zu einem Film aushärten. Werden Füllstoffe mitverwendet, so ist deren Einsatz auf solche beschränkt, die durch ihr Absorptionsverhalten den Polymerisationsvorgang nicht unterdrücken. Beispielsweise können Talkum, Schwerspat, Kreide, Gips, Kieselsäuren, Asbestmehle und Leichtspat als lichtdurchlässige Füllstoffe verwendet werden. Erfolgt die Härtung durch thermische Initiatoren oder durch energiereiche Strahlung, z.B. Elektronenstrahlung oder γ-Strahlung, so sind prinzipiell alle Füllstoffe, Pigmente und Verstärkungsmaterialien, wie sie üblicherweise eingesetzt werden, verwendbar.

### Herstellung der Bindemittel

### Beispiel B1:

870 Teile EUREPOX RV-C (handelsüblicher Diglycidyläther auf Basis von Cyclohexandimethanol der Fa. SCHERING AG, Epoxidgehalt: 9,1 %), 2,5 Teile Hydrochinonmonomethyläther und 6 Teile Triphenylphosphin werden unter Durchleiten von Luft auf 90 °C erhitzt und binnen 2 h mit 335 Teilen Acrylsäure versetzt. Unter gleichen Bedingungen wird bis zu einer Säurezahl < 5 nachgerührt. Man erhält ein hellgelbes Produkt mit einer Viskosität von 6100 mPas und einem Doppelbindungsgehalt von 9,1 %.

### Beispiel B2:

3348 Teile BECKOPOX EP 140 (handelsüblicher Diglycidyläther auf Basis von Bisphenol A der HOECHST AG, Epoxidgehalt: 8,6 %), 1,4 Teile Hydrochinonmonomethyläther und 16 Teile Triäthylamin werden unter Durchleiten von Luft auf 90 °C erhitzt und binnen 2 h mit 1296 Teilen Acrylsäure versetzt. Unter gleichen Bedingungen wird bis zu einer Säurezahl < 5 nachgerührt. Man erhält ein hellgelbes Produkt mit einer Viskosität von 10500 mPas und einem Doppelbindungsgehalt von 9,2 %.

### Beispiel B3:

273 Teile Isophorondiisocyanat, 0,8 Teile 2,6-Di-tert.-butyl-4-methylphenol und 1,3 Teile Dibutylzinndilaurat werden unter Luftdurchleiten bei Raumtemperatur gemischt und binnen 2 h mit einer Mischung aus 166 Teilen 2-Hydroxypropylacrylat, 17 Teilen Hydroxyäthylacrylat, 23 Teilen 2-Hydroxybutylacrylat und 160 Teilen eines trifunktionellen Caprolactons (OH-Zahl: 308 mg KOH/g) versetzt. Anschließend werden 97 Teile Sartomer 454 (handelsübliches Triacrylat eines äthoxylierten Trimethylolpropans der Fa. Cray-Valley) zugegeben und solange nachgerührt bis ein Isocyanatgehalt von < 0,2 % erreicht ist. Man erhält ein farbloses Produkt mit einer Viskosität von 2400 mPas und einem Doppelbindungsgehalt von 7,0 %.

### Herstellung der Emulgatoren B

### Beispiel E1 (hydrophiles Epoxid Typ B1):

1050 Teile BECKOPOX EP 140 (handelsüblicher Diglycidyläther auf Basis von Bisphenol A der HOECHST AG, Epoxidgehalt: 8,6 %) und 450 Teile Jeffamine M 2070 werden unter Rühren und unter Überleiten von Stickstoff für 5 Stunden auf 120 °C erhitzt und anschließend auf 90°C abgekühlt. Nach Zugabe von 4 Teilen Hydrochinonmonomethyläther und 9 Teilen Triphenylphosphin werden unter Durchleiten von Luft und unter weiterem Rühren 360 Teile Acrylsäure binnen 4 Stunden zugetropft. Anschließend wird bis zu einer Säurezahl <5 und einem Epoxidgehalt <0,5 % nachgerührt.
Man erhält ein hellgelbes Harz mit einem Doppelbindungsgehalt von 6,2 %.

### Beispiel E2 (hydrophiles Epoxid Typ B1):

875 Teile EUREPOX RV-C (handelsüblicher Diglycidyläther auf Basis von Cyclohexandimethanol der Fa. SCHERING AG, Epoxidgehalt: 9,1 %) und 375 Teile Jeffamine M 2070 werden unter Rühren und unter Überleiten von Stickstoff für 5 Stunden auf 120 °C erhitzt und anschließend auf 90°C abgekühlt. Nach Zugabe von 3 Teilen Hydrochinonmonomethyläther und 8 Teilen Triphenylphosphin werden unter Durchleiten von Luft und unter weiterem Rühren 292 Teile Acrylsäure binnen 4 Stunden zugetropft. Anschließend wird bis zu einer Säurezahl <5 und einem Epoxidgehalt <0,5 % nachgerührt.
Man erhält ein hellgelbes Harz mit einem Doppelbindungsgehalt von 6,3 %.

### Beispiel E3 (hydrophiles Epoxid Typ B1):

522 Teile EUREPOX RV-C (handelsüblicher Diglycidyläther auf Basis von Cyclohexandimethanol der Fa. SCHERING AG, Epoxidgehalt: 9,1 %) und 2000 Teile Jeffamine M 2070 werden unter Rühren und unter Überleiten von Stickstoff für 5 Stunden auf 120 °C erhitzt und anschließend auf 90°C abgekühlt. Nach Zugabe von 5 Teilen Hydrochinonmonomethyläther und 5 Teilen Triphenylphosphin werden unter Durchleiten von Luft und unter weiterem Rühren 68 Teile Acrylsäure binnen 4 Stunden zugetropft. Anschließend wird bis zu einer Säurezahl <3 und einem Epoxidgehalt <0,3 % nachgerührt.
Man erhält ein hellgelbes Harz mit einem Doppelbindungsgehalt von 0,8 %.

### Beispiel E4 (hydrophiles Epoxid Typ B2):

160 Teile BECKOPOX EP 140 (handelsüblicher Diglycidyläther auf Basis von Bisphenol A der HOECHST AG, Epoxidgehalt: 8,6 %), 200 Teile Polyäthylenglykolmonomethyläther mit einem Molekulargewicht von 5000, 40 Teile Sartomer 454 (handelsübliches Triacrylat eines äthoxylierten Trimethylolpropans der Fa. Cray-Valley) und 2 Teile Hydrochinonmonomethyläther werden unter Luftdurchleiten auf 70 °C erhitzt und binnen 30 min mit 10 Teilen Isophorondiisocyanat versetzt. Bei gleicher Temperatur wird anschließend bis zu einem NCO-Wert <0,2 % nachgerührt.

Nach Zugabe von weiteren 2 Teilen Hydrochinonmonomethyläther und 5 Teilen Triphenylphosphit werden unter Durchleiten von Luft und unter weiterem Rühren 59 Teile Acrylsäure binnen 4 Stunden zugetropft. Anschließend wird bis zu einer Säurezahl <5 und einem Epoxidgehalt <0,5 % nachgerührt.
Man erhält ein kristallisierendes Harz mit einem Doppelbindungsgehalt von 4,0 %.

### Beispiel BW 1 (wasserlösl. Epoxidacrylat):

49 Teile BECKOPOX EP 301 (handelsüblicher Diglycidyläther auf Basis von Bisphenol A der HOECHST AG, Epoxidgehalt: 3,3 %) und 21 Teile Jeffamine M 1000 werden unter Rühren und unter Überleiten von Stickstoff für 4 Stunden auf 140 °C erhitzt und anschließend auf 90°C abgekühlt. Nach Zugabe von 0,2 Teilen Hydrochinonmonomethyläther und 0,4 Teilen Triphenylphosphin werden unter Durchleiten von Luft und unter weiterem Rühren 42 Teile Acrylsäure binnen 4 Stunden zugetropft. Nach Zugabe von 6,5 Teilen Sartomer 454 (handelsübliches Triacrylat eines äthoxylierten Trimethylolpropans der Fa. Cray-Valley) wird bis zu einer Säurezahl <5 und einem Epoxidgehalt <0,5 % nachgerührt.
Man erhält ein hellgelbes Harz mit einem Doppelbindungsgehalt von 2,5 %. Unter starkem Rühren werden anschließend langsam 230 Teile Wasser eingerührt; man erhält eine fast klare wäßrige Bindemittellösung.

### Herstellung der Dispersionen

### Beispiel D1

110 Teile des Bindemittels B1 werden unter Rühren mit 90 Teilen des Emulgators E1 auf 50 °C erhitzt und homogenisiert. Binnen 5 min werden unter Rühren mit einem Dissolver (U = 20 m/sec) 50 Teile Wasser eingetragen. Nach 15 min Rühren wird die Dispersion auf Raumtemperatur abgekühlt und mit weiteren 114 Teilen Wasser verdünnt. Man erhält eine weiße milchige Dispersion mit einer Viskosität von 520 mPas und einem Feststoffgehalt von 55 %.

### Beispiel D2

135 Teile des Bindemittels B1 werden unter Rühren mit 165 Teilen des Emulgators E1 auf 40 °C erhitzt und homogenisiert. Binnen 5 min werden unter Rühren mit einem Dissolver (U = 20 m/sec) 80 Teile Wasser eingetragen. Nach 15 min Rühren wird die Dispersion auf Raumtemperatur abgekühlt und mit 120 Teilen Wasser verdünnt. Man erhält eine weiße milchige Dispersion mit einer Viskosität von 730 mPas und einem Feststoffgehalt von 60 %.

### Beispiel D3

88,5 Teile des Bindemittels B2 werden unter Rühren mit 11,5 Teilen des Emulgators E3 auf 40 °C erhitzt und homogenisiert. Binnen 5 min werden unter Rühren mit einem Dissolver (U = 20 m/sec) 20 Teile Wasser eingetragen. Nach 15 min Rühren wird die Dispersion auf Raumtemperatur abgekühlt und mit 47 Teilen Wasser verdünnt. Man erhält eine weiße milchige Dispersion mit einer Viskosität von 600 mPas und einem Feststoffgehalt von 60 %.

### Beispiel D4

304 Teile des Bindemittels B1 werden unter Rühren mit 96 Teilen des Emulgators E4 auf 40 °C erhitzt und homogenisiert. Binnen 5 min werden unter Rühren mit einem Flügelrührer (Drehzahl = 400 U/min) 100 Teile Wasser eingetragen. Nach 3 h Rühren wird die Dispersion auf Raumtemperatur abgekühlt und langsam mit 227 Teilen Wasser verdünnt. Man erhält eine weiße milchige Dispersion mit einer Viskosität von 720 mPas und einem Feststoffgehalt von 55 %.

### Beispiel D5

81 Teile des Bindemittels B2 werden unter Rühren mit 19 Teilen des Emulgators E4 auf 40 °C erhitzt und homogenisiert. Binnen 5 min werden unter Rühren mit einem Dissolver (U = 20 m/sec) 20 Teile Wasser eingetragen. Nach 20 min Rühren wird die Dispersion auf Raumtemperatur abgekühlt und langsam mit 47 Teilen Wasser verdünnt. Man erhält eine weiße milchige Dispersion mit einer Viskosität von 650 mPas und einem Feststoffgehalt von 60 %.

### Beispiel D6

85 Teile des Bindemittels B3 werden unter Rühren mit 15 Teilen des Emulgators E3 auf 40 °C erhitzt und homogenisiert. Binnen 5 min werden unter Rühren mit einem Dissolver (U = 20 m/sec) 25 Teile Wasser eingetragen. Nach 15 min Rühren wird die Dispersion auf Raumtemperatur abgekühlt und langsam mit 57 Teilen Wasser verdünnt. Man erhält eine weiße milchige Dispersion mit einer Viskosität von 530 mPas und einem Feststoffgehalt von 55 %.

## Patentansprüche

1. Wäßrige strahlenhärtbare Bindemittel und Bindemitteldispersionen enthaltend im wesentlichen
A) ein strahlenhärtbares (Meth)Acrylat-Gruppen enthaltendes Bindemittel und
B) ein strahlenhärtbares, hydrophiles Polyepoxidacrylat.

2. Wäßrige strahlenhärtbare Bindemittel und Bindemitteldispersionen nach Anspruch 1, dadurch gekennzeichnet, daß die Bindemittel A) ausgewählt sind aus der Gruppe der Polyacrylatacrylate, der Polyepoxyacrylate, der Polyurethanacrylate, der Polyesteracrylate, der Polyätheracrylate und der Melaminacrylate und der entsprechenden Methacrylverbindungen.

3. Wäßrige strahlenhärtbare Bindemittel und Bindemitteldispersionen nach Anspruch 1, dadurch gekennzeichnet, daß das strahlenhärtbare hydrophile Polyepoxidacrylat B) erhältlich ist aus einer Di- oder Polyepoxid-Komponente B0)
B1) durch Umsetzung mit einem primären oder sekundären Monoamin eines Polyäthylen(propylen-)glykolmonoäthers und/oder
B2) durch Umsetzung mit einem Diisocyanat oder Polyisocyanat und danach mit einem Polyäthylen-(propylen-)glykolmonoäther
sowie in einem nachfolgenden Schritt durch Umsetzung mit Acryl- oder Methacrylsäure.

4. Wäßrige strahlenhärtbare Bindemittel und Bindemitteldispersionen nach Anspruch 1, dadurch gekennzeichnet, daß die Di- oder Polyepoxid-Komponente B0) erhältlich ist durch Umsetzung von
B01) Verbindungen mit mehr als einer Epoxidgruppe pro Molekül, und
B02) Verbindungen mit mehr als einer gegenüber Epoxidgruppen reaktiven Gruppe.

5. Wäßrige strahlenhärtbare Bindemittel und Bindemitteldispersionen nach Anspruch 4, dadurch gekennzeichnet, daß bei der Herstellung der Di- oder Polyepoxidkomponente B0) zusätzlich eine oder mehrere Verbindungen eingesetzt werden, die ausgewählt sind aus
B03) Verbindungen, die eine Epoxidgruppe pro Molekül enthalten, und
B04) Verbindungen, die eine gegenüber Epoxidgruppen reaktive Gruppe enthalten.

6. Wäßrige strahlenhärtbare Bindemittel und Bindemitteldispersionen nach Anspruch 1, dadurch gekennzeichnet, daß die Di- oder Polyepoxid-Komponente B0) eine oder mehrere Poly-N-Glycidylverbindungen enthält.

7. Wäßrige strahlenhärtbare Bindemittel und Bindemitteldispersionen nach Anspruch 1, dadurch gekennzeichnet, daß die Di- oder Polyepoxid-Komponente B0) Polyglycidylester von Polycarbonsäuren enthält.

8. Wäßrige strahlenhärtbare Bindemittel und Bindemitteldispersionen nach Anspruch 1, dadurch gekennzeichnet, daß die Di- oder Polyepoxid-Komponente B0) glycidylestergruppenhaltige Copolymerisate enthält.

9. Wäßrige strahlenhärtbare Bindemittel und Bindemitteldispersionen nach Anspruch 4, dadurch gekennzeichnet, daß die Verbindungen B02) mit mehr als einer gegenüber Epoxidgruppen reaktiven Gruppe ausgewählt sind aus
B021) Polyhydroxyaromaten,
B022) Poly(hydroxyaryl)-(cyclo)alkanen,
B023) Polyhydroxyaryläthern,
B024) Polyhydroxyarylketonen
B025) Polyhydroxyarylsulfonen, und
B026) aliphatischen linearen, verzweigten und cyclischen Polyhydroxyverbindungen.

10. Wäßrige strahlenhärtbare Bindemittel und Bindemitteldispersionen nach Anspruch 1, dadurch gekennzeichnet, daß die Epoxidkomponente B eine gewichtsmittlere Molmasse von 500 bis 30000 g/mol aufweist.

11. Wäßrige strahlenhärtbare Bindemittel und Bindemitteldispersionen nach Anspruch 1, dadurch gekennzeichnet, daß die Epoxidkomponente B einen Massengehalt an Oxyäthyleneinheiten in von Polyäthylenglykol abgeleiteten Struktureinheiten von 10 bis 90 % hat.

12. Wäßrige strahlenhärtbare Bindemittel und Bindemitteldispersionen nach Anspruch 1, dadurch gekennzeichnet, daß in der Mischung der Massengehalt der Komponente A) 0 bis 98 %, und der der Komponente B) 100 bis 2 % beträgt.

13. Wäßrige strahlenhärtbare Bindemittel und Bindemitteldispersionen nach Anspruch 1, dadurch gekennzeichnet, daß das strahlenhärtbare Polyepoxidacrylat B) erhältlich ist durch Umsetzung einer Di- oder Polyepoxid-Komponente B0) mit einem primären oder sekundären Monoamin eines Polyäthylenglykol-monoäthers oder deren Gemischen, und im zweiten Schritt durch Umsetzung des Produkts des ersten Schrittes mit Acrylsäure oder Methacrylsäure oder deren reaktiven Derivaten.

14. Wäßrige strahlenhärtbare Bindemittel und Bindemitteldispersionen nach Anspruch 1, dadurch gekennzeichnet, daß das strahlenhärtbare Polyepoxidacrylat B) erhalten wird durch Umsetzung eines Di- oder Polyepoxids mit mindestens einem Diisocyanat oder Polyisocyanat und mindestens einem Polyäthylen(propylen)glykol-monoäther, und im zweiten Schritt durch Umsetzung des Produkts des ersten Schrittes mit Acrylsäure oder Methacrylsäure oder deren reaktiven Derivaten.

15. Verfahren zur Herstellung von wäßrigen strahlenhärtbaren Bindemitteln und Bindemitteldispersionen, dadurch gekennzeichnet, daß die Komponenten A) und B) gemischt werden und in die Mischung anschließend unter Rühren Wasser eingetragen wird.

16. Strahlenhärtbare Überzüge aus Bindemitteln und Bindemitteldispersionen nach Anspruch 1.

17. Strahlenhärtbare Überzüge aus Bindemitteln und Bindemitteldispersionen nach Anspruch 1, dadurch gekennzeichnet, daß zusätzlich ein Photoinitiator zugesetzt wird.
